# EUROPEAN PATENT APPLICATION

(11) **EP 3 866 076 A1**
(43) Date of publication of application: **18.08.2021**
(21) Application number: 20157666.7
(22) Date of filing: 17.02.2020
(51) Int. Cl.: G06Q 10/00, A61J 17/00

(54) **A METHOD AND A SYSTEM FOR ENSURING THE INTEGRITY OF A PACIFIER**

(71) Applicant: AH License ApS, 3400 Hillerød (DK)
(72) Inventor: LARSEN, Henrik, 3400 Hillerød (DK)
(74) Representative: Inspicos P/S

(57) **Abstract**

A system and a method of ensuring the integrity of a pacifier. The date of first use of the pacifier is entered into the system, so that the system may remind the parent of when to replace the pacifier. The use pattern may be used for adapting the replacement time. The age of the user may be used to ensure that the pacifiers in use are suitable.

## Description

The present invention relates to a method and a system for checking or ensuring the integrity of a pacifier, such as a pacifier with a unique ID, such as an ID visible on or readable from the pacifier.

The invention relates to a pacifier comprising a unique identifier, such as a visible identifier or an electronic unique identifier, such as a RFID tag. A unique identifier does not only is capable of identifying a production batch but may identify each individual pacifier. 'Visible' means that the unique identifier is visible without requiring any disassembling of the pacifier. Examples are barcodes and/or numbers.

The unique identifier allows for registration of the pacifier in a database and storing 'use data' comprising the time each pacifier is brought to use. Registration in the database may be done automatically by scanning the unique identifier (e.g. a sequence of alphanumeric symbols or a QR code) with a camera and electronic device capable of deciphering the information and facilitate upload of the data to the database. Alternatively or additionally, the use data may be stored on the electronic device.

The data in the database in turn allows for notifying parents/care givers when it is time to dispose of each pacifier.

Additionally, each pacifier with unique identifier may be pre-registered in a database with data linking each pacifier to its time and/or place (perhaps even operator and machine ID). This improves the possibility of identifying and possibly recalling defective pacifiers.

Another significant advantage is the possibility of authenticating each pacifier. Accordingly, both consumers and producers can verify that the pacifier is indeed the pacifier according to its specifications.

In a first aspect, the invention relates to a method of ensuring the integrity of a pacifier the method comprising the steps of:
- reading, from the pacifier, a unique identifier,
- entering, into a processing unit, the identifier and a first point in time of use of the pacifier,
- generating first information from the first point in time and a present point in time, and
- outputting the first information.

In the present context, the integrity of a pacifier may be the integrity or safety of the nipple portion thereof, the cleanliness of the pacifier or the suitability thereof for a user, for example.

A pacifier usually has a nipple portion for positioning in the mouth of a user, such as a child, and a shield portion configured to be outside of the mouth and usually dimensioned so as to be larger than the nipple portion so as to make it difficult to provide the shield portion in the mouth of the user. The shield portion may be aimed at making it difficult or impossible for the user to swallow the pacifier. Usually, the nipple portion is attached to, such as fixed to, the shield portion.

The nipple portion often is resilient or deformable, so as to be adaptable to the oral cavity of the user when sucking. The nipple portion may be made of rubber, polymer, silicone, latex or the like.

Nipple portions may deteriorate over time, such as due to the deformation caused by the use thereof, such as when the user sucks on it, or due to the environment in the mouth of the user. Saliva contains enzymes and the like which may affect the material of the nipple portion.

Also, other actions may influence the nipple portion, such as biting, stretching, scalding/boiling and the like. Nipple portion materials also may slowly decay over time, such as become harder or loose flexibility.

Thus, the nipple portion of a pacifier often deteriorates over time. Thus, often, a shelf time is defined for such products after which they are recommended discarded. Shops/distributors may be better at observing this, whereas private users and their care persons, such as their parents, may be less observant in this connection. Also, often such expiration date is visible from the packet or box of the pacifier and not from the actual product, such as when unboxed.

In addition, often pacifiers are recommended discarded after a predetermined period of use. Again, when this period of time lapses may not be determined from the pacifier.

According to the invention, a unique identifier is read from the pacifier. A unique identifier may be any number, text string or a combination thereof which may be particular to this pacifier. Naturally, the identifier need not be absolutely unique to this pacifier. Other products may have the same identifier, or other pacifiers may have the same number, such as if produced at sufficiently different points in time. Naturally, a pacifier may today have an ID which a pacifier had 1, 2, 3, 4, 5, 6, or 7 years ago or more.

The ID may be unique for a particular type of pacifier, such as a pacifier with a particular colour, particular shape or a combination thereof.

The ID is read from the pacifier. This reading may be the reading by the naked eye or a camera of numbers/characters visible on/in the pacifier. A pacifier may be provided with a surface or portion where such characters/numbers are visible, such as on the shield portion or another portion. Naturally, a visible bar code (one-dimensional, two-dimensional) may be used, as may holograms and the like.

The reading may be by a camera providing an image from which the ID may be determined, such as using optical character recognition or the like. Bar code/hologram scanners also exist.

Other types of reading may be the reading of an ID using wireless communication with an element in the pacifier, such as reading using NFC, RFID, Bluetooth or the like. It is desired that a communication element of the pacifier does not require a separate energy storage, such as a battery. NFC and RFID chips derive, from the query signal received, the energy required for outputting the response.

The ID is entered into a processing unit. A processing unit may be any type of processor or controller, such as a processor, DSP, FPGA, software controllable or hardwired - or any combination thereof.

The entering may be automatic, such as when using an antenna or receiver for communicating with a wireless communication element of the pacifier.

The entering may be via a camera imaging the ID, where the processing unit, or another unit, may derive the ID from the image.

In addition or alternatively, the entering may be manual, such as when a user views the ID and enters the ID into the processor using a keyboard, touch pad, voice, or the like.

Also, a first point in time of use of the pacifier is entered. This point in time may be a date of first use of the pacifier by a user, or even a more specific point in time, such as a time of day.

When the first point in time is entered, the processing unit may now assist the care person in remembering or determining when to discard and potentially replace the pacifier. This discarding date may be determined in a number of manners, and other factors than time may be used to determine when the pacifier should no longer be used.

From the first point in time and a present point in time, first information may be generated and output. The present point in time may be a present date or even time of day.

The first information may be information relating to the integrity of the pacifier or the suitability or safety thereof. The first information may be a warning, if the integrity/safety/suitability is determined to be too low.

If it is determined that the integrity/safety/suitability is found acceptable, no information need be output.

The first information may be output as sound, an image/video, as text, and/or a colour, for example. A green colour may be displayed if the integrity/safety/suitability is found OK, a red, if it is not, and a yellow, if an undesired integrity/safety/suitability is approaching.

The first information may be output immediately after the reading step. Alternatively, the first information may be output at a later stage, such as when the integrity/safety/suitability of the pacifier has been determined or estimated to no longer be OK.

As described, one manner of determining or evaluating the integrity/safety/suitability of a pacifier is the time elapsed from first time of use. Often, a maximum period of time of use is mentioned by a producer.

Thus, in one embodiment, the generating step comprises generating the information also from a recommended maximum period of use of the pacifier, and wherein the information is a warning, if the first point in time of use plus the recommended maximum period of use lies before the present point in time.

Often, the maximum recommended period of time is 4-6 weeks. However, it may be acceptable to actually use the pacifier for a longer period of time, such as if it is used less than expected. Also, a shorter period of time may be suitable, if the use is more intense than expected, or if the use may degrade the pacifier in other manners more than expected.

Preferably, a database is provided comprising an entry for each unique identifier. In this manner, information may be stored in the database for this particular pacifier or for a group of pacifiers which are considered identical or of the same type.

The production date of a pacifier may be stored as may a batch number or the like. Then, if a batch is determined as faulty, it may be easier to identify the pacifiers which may then be faulty. Information to that effect may then be forwarded to the processing unit and a warning may be output to the care person.

The first date of use may be fed to the database, so that the database has this information if the processing unit malfunctions or looses this data.

The database may be central to a number of pacifiers or a number of users or care persons. Alternatively, the database may be distributed, such as for each user or a number of users.

The processing unit may be a computer, PC, laptop, pad, mobile phone or the like. The database or the pertaining information may be stored in this PC or the like. Often, the processing unit will run a program or app which may control the reading, the entering, the generation and/or the outputting.

The database may also store an image of the pacifier so that if a pacifier with a particular ID is sought for, the image may help the care person to swiftly identify the pacifier.

Other information relating to the pacifier may be stored in the database or provided to a user or care person.

In one embodiment, the database comprises information relating to pacifiers or types of pacifiers suited for users having teeth, the method further comprising the steps of:
- entering into the processing unit, information relating whether a user of the pacifier has teeth and
- if the pacifier is not among the pacifiers or types of pacifiers suitable for use by users having teeth, outputting corresponding information.

Children having teeth may tend to bite the pacifier, such as the nipple portion, potentially causing accelerated deterioration thereof.

Some types of pacifiers may be adapted to this biting by being sturdier at least at the positions often bit. Thus, a pacifier suitable for use by users having teeth may have a thicker nipple portion, a thicker stem portion thereof, when the nipple portion has a stem portion close to the shield portion and a wider portion farther away from the shield portion. Here the stem portion is where the teeth are, when the wider portion is inside the oral cavity of the user.

Other types of suitable pacifiers may be pacifiers having nipple portions made of a material which better withstands biting or severing, such as silicone, thermoplastics (such as TPE or TPU) or natural rubber.

Other pacifier types may not be suited for use with teeth, whereby it may be desired to replace these when the user has grown the first tooth.

The information may then be entered when the user grows his/her first tooth. Alternatively, information may be entered later, such as by entering that the user has one or more teeth.

The information output may be a warning, such as that the pacifier with this ID should be discarded or replaced.

In addition or alternatively, the generating step may comprise reducing the recommended maximum period of use when the user has teeth and the pacifier is not suitable for that user. It may be decided to shorten the maximum recommended period of time of use when the user has teeth. Thus, it may be calculated or estimated how much faster the pacifier will degrade to an undesired level now that the user has teeth. This lower recommended maximum time may then be determined and used in the generating step. Then, the pacifier may immediately be determined to have a too low integrity/safety/suitability, and the first information may be output to that effect. Alternatively, the first information may be output, now sooner than if the user did not have teeth.

Another type of information which may be stored in the database and/or taken into consideration comprises information relating to a recommended age interval of a user of the pacifier. Pacifiers, in addition to the protection or resistance against the deterioration caused by teeth, may also be configured, such as dimensioned, to different ages of the users. An older user may have a larger oral cavity so that the size and dimensions of the pacifier may be different. Also, users of different ages may provide a stronger or weaker suction, so that the strength of the pacifier, such as a nipple portion and/or its attachment to the shield portion, may be different.

Usually, pacifiers will be aimed at users with an age within a predetermined age interval. An age interval may be a number of months, such as an age of 0-2 months, 1-1½ years of age and the like.

Then, the method may further comprise the steps of:
- entering into the processing unit an age of a user of the pacifier,

if the age of the user is outside of the recommended age interval, outputting corresponding information.

Then, the age, or data of birth, of the user may be entered into the processing unit, which may then store and update this to maintain monitoring of the pacifier(s). When the age of the user falls outside of the interval recommended for the pacifier, corresponding information may be output.

As mentioned above, the recommended maximum period of time of use may be adapted to the actual use scenario. Some users may use the pacifier more than expected, some may use it less. Some users may have many pacifiers such that each pacifier is used less.

Thus, one embodiment further comprises the step of entering, into the processing unit, information relating to a percentage of time in which the pacifier is used, wherein the generating step comprises, if the percentage is above a threshold percentage, reducing the recommended maximum period of use of the pacifier.

Thus, a percentage of time of e.g. a day or night (such as 24 hours) during which the pacifier is used may be entered. If the user has more pacifiers, this percentage may be less for the pacifiers.

The maximum recommended period of time of use may be determined based on an estimated percentage of use. Thus, if the use is less, the pacifier may have an acceptable integrity/safety/suitability for a longer period of time.

On the other hand, if the percentage of use is higher, the integrity/safety/suitability may sooner become unacceptable.

In one embodiment, the integrity/safety/suitability may be related directly to a number of hours of use. The maximum recommended period of use may be estimated based on this number of hours and an estimated number of hours of use per day. Thus, when the use per day exceeds this number of hours, the number of days of the maximum recommended period of use may be reduced correspondingly.

In the same manner, the maximum recommended period of use may be extended, if the use per day is less than that expected, as it will then take more days to arrive at the number of hours for which the pacifier should have a suitable integrity/safety/suitability.

In one embodiment, as mentioned, the reading step comprises reading information from a RFID unit provided in the pacifier. Alternatively the method may comprise reading/scanning a number, text or barcode (lD/2D/hologram) from pacifier and even manually entering information which may be visible to the naked eye.

One aspect of the invention relates to a pacifier for use in the method of the first aspect.

Another aspect of the invention may relate to a method comprising the steps of providing a pacifier with a unique identifier, registering the pacifier in a database, storing the use initiation time for the pacifier in the database, and issuing a notification when it is time to dispose of the pacifier on the basis of at least the use initiation time.

A third aspect of the invention relates to an assembly of a pacifier with a unique identifier and a processing unit comprising an entering unit, the processing unit being configured to:
- receive a first point in time of use of the pacifier,
- generate first information from the first point in time and a present point in time, and
- output the first information.

Naturally, all embodiments, aspects and situations may be combined in any desired manner.

Entering the first point in time of use may enter the pacifier into the assembly so that the processing unit will now monitor this pacifier until removed again.

The pacifier may be of the types described above, and the unique number may be provided anywhere on the pacifier, such as the nipple portion, the shield portion, a manipulation portion, such as a ring or a protrusion or the like.

The unique identifier may be printed on to the pacifier, engraved therein, moulded therein, or the like. The identifier may be a number, text, characters or the like.

The identifier may be represented in a remote readable element of the pacifier, such as provided in the pacifier material, such as in the shield portion. Such elements may be operatable to output the identifier without requiring an internal energy storage. Usual candidates for such elements are RFID or NFC tags, but other candidates exist.

In that situation, the assembly or processing unit preferably further comprises means for reading information from a remotely readable element, such as a RFID/RFC unit, provided in the pacifier. These means may be directly connected to the processing unit or in communication therewith.

Remote reading has advantages in that if a particular pacifier is searched for in a group of pacifiers, such as if a warning has been output for that pacifier, the pacifiers may sequentially be presented to the reader, which may give a signal when the sought for pacifier is presented.

The processing unit may be based on any technology, such as a controller, processor, FPGA, DSP or the like, software controlled or hardwired. Naturally, a combination thereof may be used, and the processing unit may be distributed or unitary as desired.

The processing unit comprises an entering unit configured to receive a first point in time of use of the pacifier. Typical entering units are keyboards or touch pads, but also voice commands may be received if desired. The point in time may be entered in a number of manners, as are seen on e.g. mobile telephones. The dials of a clock may be directed to the correct point in time, the point in time may be entered as a date, or a date and a time of day using mm/dd/hh/mm, for example. Also, a button may be provided which when manipulated will enter a present date or date and time of day as the first time of use. Clearly, multiple manners may be offered.

The first information is generated as described above. This information is output in any desired manner. The information usually is output on a display, but may be output as sound or as a message (text, mail, sms, or the like) to a care taker or supervisor or the like.

As mentioned above, the information may be generated and output when the first time of use has been entered, when requested by an operator, or when the information is determined to have a particular content, such as when the information is a warning.

In one situation, the processing unit is configured to, during the generating step, generate the information also from a recommended maximum period of use of the pacifier, and wherein the processing unit is configured to output the information in the form of a warning, if the first point in time of use plus the recommended maximum period of use lies before the present point in time.

The present point in time may be derived from a real time clock communicating with the processing unit. When the processing unit is a mobile telephone, a clock is already provided.

As mentioned above, a database is preferred comprising an entry for each unique identifier. This database may be stored in a data storage local to the processing unit or may be a storage in communication with the processing unit, such as a cloud based database. The processing unit may read data from the database and enter data, such as the first date of use, into the database. Also, if a pacifier is discarded, this may be entered into the database.

The database may hold information for each pacifier or group of pacifiers, such as batch number, production date and the like. The database may additionally comprise an image of the pacifier. Also more particular information may be provided, such as for which users the pacifier is suited or for which use the pacifier is suited.

In one embodiment, the database comprises information relating to pacifiers or types of pacifiers suited for users having teeth, the processing unit further being configured to:
- receive information relating whether a user of the pacifier has teeth and
- if the pacifier is not among the pacifiers or types of pacifiers suitable for use by users having teeth, output corresponding information.

A user having teeth may bite the pacifier, such as the nipple portion, whereby the pacifier may be deteriorated or weakened. Often, the biting will take place at a stem portion of the nipple portion close to the shield portion. Thus, pacifiers may be made with a larger material thickness at this position to better withstand biting or to retain their integrity in spite of this treatment. Other pacifiers may not have such features.

Thus, such information may be provided in the database.

The operator may enter information as to whether the user has one or more teeth. This information may be stored in or at the processing unit and/or the database.

The user may have a number of pacifiers so that the processing unit performs the above analysis for all pacifiers and outputs information as to which pacifiers are no longer suitable.

Clearly, the corresponding information can be a warning, if the pertaining pacifier is not suited for users with teeth.

In another situation, the fact that the user has teeth may be used by the processing unit to reduce the recommended maximum period of use for a pacifier not suited for users with teeth. As described above, biting may accelerate deterioration of the pacifier so that a shorter recommended use period may be calculated.

In another situation, the database comprises information relating to a recommended age interval of a user of the pacifier. Pacifiers may be adapted to users of a particular age or age interval, as users of different ages may have different sized oral cavities. Clearly, also the age will be indicative of whether the user may have teeth or not.

Different sizes may be different sizes of nipple portions but also of the shield. A too large nipple portion may restrict the airways of a small user and a too small shield may too easily find its way into a user's mouth.

Then, the processing unit further may be configured to:
- receive an age of a user of the pacifier,
- if the age of the user is outside of the recommended age interval, output corresponding information.

Again, the corresponding information may be a warning, if the user is not of an age within the interval recommended for the pacifier. If the user is of a suitable age, no information need be output.

As mentioned above, different users may use a pacifier for very different periods of time per day. A pacifier may be recommended used only for a certain number of days, but this may be based on an assumed use pattern. Also, if the user has a number of pacifiers, each pacifier may be used less than if the user had only one pacifier.

Then, the processing unit may configured to:
- receive information relating to a percentage of time in which the pacifier is used, and
- if the percentage is above a threshold percentage, reduce the recommended maximum period of use of the pacifier.

Thus, for example, the recommended maximum use period may be estimated on a total number of hours of use. If the actual use per day is lower than this estimate, the recommended period of use may be extended. If, on the other hand, the user uses the pacifier more than expected, the recommended period of use may be shortened.

Clearly, when a pacifier is discarded or replaced, information to that effect may be entered into the processing unit and/or database. Then, the processing unit will no longer monitor the pacifier. Also, the processing system may emit a warning if that pacifier is again attempted entered new.

A final aspect of the invention relates to a pacifier for use in the above assembly.

In the following, preferred embodiments of the invention will be described with reference to the drawing, wherein:
- Figure 1 is a side view of a pacifier,
- Figure 2 illustrates a shield from a pacifier according to the invention,
- Figure 3 illustrates a ring from a pacifier according to the invention,
- Figure 4 illustrates an alternative shape of a shield from a pacifier according to the invention,
- Figure 5 illustrates a system for ensuring the integrity of a pacifier, and
- Figure 6 illustrates the enlargement of the nipple portion.

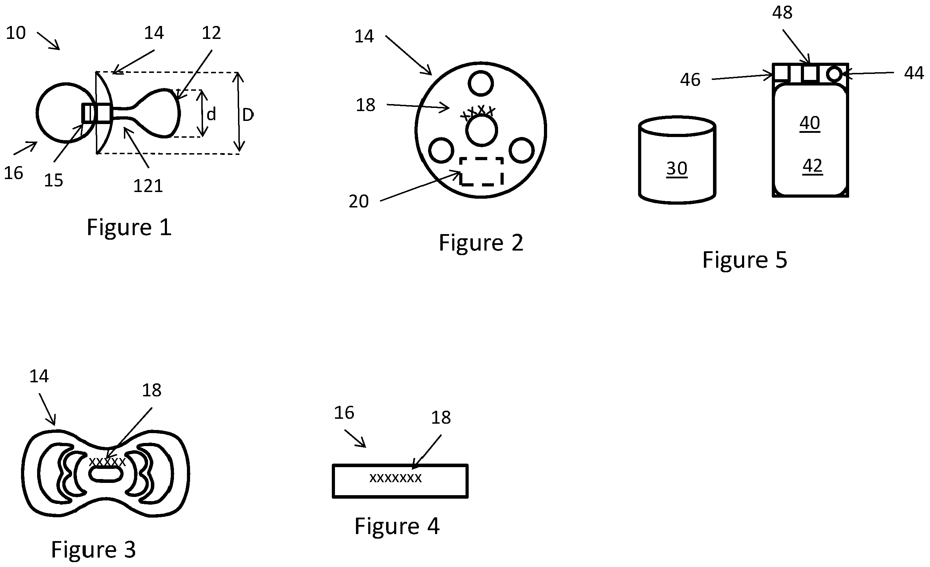

In figure 1, a pacifier is illustrated having a nipple or teat 12 configured to be provided in the mouth of a user, such as a toddler. To prevent the nipple 12 from being swallowed, a shield 14 is provided which has a size configured to not fit into the user's mouth. For easier manipulation of the pacifier, a ring 15 or the like is provided.

Assembly of the pacifier often is provided by proving the end of the nipple 12 into a central opening of the shield and fastening that end with respect to the shield by forcing a stem 15 into the nipple to fasten the nipple in relation to the shield and the stem. The ring 16 usually is attached, often rotationally, in relation to the stem.

A unique identifier is provided in the pacifier. This may be as a number or text, such as engraved or stamped into the material or printed on to the material. Alternatively, other methods may be used for providing the information on to the pacifier, such as gluing a label on to it. In figures 2 and 3, differently shaped shields 14 are illustrated each having a text 18 provided thereon.

In figure 2, another manner of providing the information is illustrated in the form of a remote readable element 19. This element may be e.g. an RFID or NFC tag which may be remotely read to derive the unique identifier.

In figure 4, a ring 16 is illustrated from which the identifier may be derived.

In general, a unique identifier may bring about a number of advantages. A clear advantage is that the user, distributor, buyer, seller or manufacturer may ascertain the genuineness of the pacifier by comparing the pacifier ID with information in a database holding IDs from genuine pacifiers. If multiple pacifiers are scanned with the same number, a problem is encountered.

Additionally, if a batch of pacifiers is faulty and should be recalled, a user reading the ID and contacting the database may be informed to that effect.

However, a number of other advantages may be obtained.

In figure 5, a system may be seen for ensuring the integrity of a pacifier. This system has a database 30 and a handheld unit 40, such as a mobile phone, pad, camera, or the like, having a display 42, a camera 44, a processor 46 and a receiver or antenna 48.

The phone and the database may communicate in any desired manner, such as wirelessly, via wires or a combination thereof.

The phone 40 may be used for deriving the ID from the pacifier. If the ID is visible, it may be derived using the camera by providing an image of the pacifier and deriving the ID therefrom.

If the ID is not visible, such as when provided in a remotely readable element 20, the receiver/antenna 48 may be used for communicating with the element 20 so as to determine the ID.

The database 30 may hold a number of data sets, each set comprising a pacifier ID and information relating to that particular pacifier. Naturally, a data set may comprise a number of IDs, such as from a batch of (expected) identical pacifiers, and the information relating to those pacifiers.

Relevant data for a pacifier may relate to its batch number and/or production date, such as for easy identification if a batch has been determined to be faulty. Also, a pacifier usually has a maximum shelf life, which naturally is counted from its production date.

Other relevant information relates to a maximum period of time the pacifier should be used before replacing. Many pacifier producers recommend replacement of a pacifier after 4-6 weeks of use. The reason is that a toddler will stretch the pacifier quite a bit when using the pacifier, which may then damage the material of the nipple portion. In addition, the environment in the mouth of a person also will affect the material of the nipple portion.

Thus, over time, the material of the nipple portion will deteriorate, and the pacifier clearly should be replaced before the nipple portion breaks, which could otherwise be fatal to the user.

Thus, it is desired that the database holds information on a recommended maximum period of time of use of the pacifier or a group of pacifiers to which that pacifier belongs.

The deterioration of the nipple portion, however, may depend on the amount of time during which the pacifier is used. Thus, if a pacifier is used less frequently or less hours each day, the deterioration may be less, so that the maximum recommended period of time of use may be extended. On the other hand, if the use per day exceeds a threshold limit, the deterioration may be accelerated so that the maximum recommended period of time of use may be reduced.

The maximum recommended period of use may be based on, or interpreted as, a maximum number of hours of use, when a number of hours of use per day is estimated or assumed. Then, if the user actually uses the pacifier more hours per day, the maximum recommended period of use may be shortened correspondingly. Clearly, if the user uses the pacifier less than assumed, the maximum recommended period of use may be extended if desired.

Then, it may be desired that the user, after having entered the ID of the pacifier into the phone 40, also enters the first point in time of use (the day/hour at which the pacifier is put to use). In that situation, the phone may, after having communicated with the database 30, be able to warn the user, when the pacifier should be replaced. Naturally, an image of the pacifier may be illustrated to assist in locating it.

The unique ID may also assist in the replacement. Usually, users will have a number of pacifiers, but identifying the right one may be achieved as described above. The phone 40 may inform the user when the outdated pacifier is identified (imaged/read).

Another factor is that the user will grow teeth. Sharp teeth clearly will be extremely problematic to the nipple portion. Thus, pacifiers for children with teeth usually will have a more rugged nipple portion 121 which is close to the shield 14.

If a user, however, uses a pacifier not suited for teeth, the deterioration of the nipple portion will be accelerated.

Then, the user may be informed that the pacifier should be replaced by a pacifier suited for use with teeth. Alternatively or additionally, the maximum recommended period of time may be reduced.

Thus, it may be desired to, in the database 30, store information for the pacifier whether it is suitable for use with teeth and/or how much the maximum recommended period of use is to be shortened, if the user has teeth.

Then, it may be desired to enter into the phone, when the user gets teeth, so that the phone may take this into account in relation to the recommended use of the pacifier. Clearly, this even may affect all pacifiers of the user. Thus, if the user has multiple pacifiers, the phone may use this information with all pacifiers and output individual recommendations for each pacifier.

Another type of information which may be of interest is the age of the user. Pacifiers exist with different size nipple portions and shields which are adapted to the expected size of the oral cavity of users at different ages.

Thus, a too large pacifier may not be safe for the user, as may a small one not. Thus, as the user gets older, a pacifier suitable in a younger age should be replaced by pacifiers suited for older users.

Thus, the parent may enter the age or birth date of the user into the system, so that the system may additionally ensure that the pacifiers in use are suitable for the age of the user. If a pacifier is in use which is not suitable, a corresponding warning may be output.

The phone may operate by running an app which is set up to control the camera and/or the antenna as well as the display and the communication with the database. The app may also store information locally on the phone, such as in order to be able to operate when not in communication with the database.

The phone may store information for each of a number of registered pacifiers. When the user gets a new pacifier, its ID may be entered into the app. When the pacifier is used the first time, this point in time may be entered into the app. Then, the app will monitor the use of the pacifier and inform the user when the pacifier is to be replaced. As described, this recommendation may be based only on a recommended maximum period of use but may also be based on a percentage of time during which the user uses the pacifier and/or whether (and optionally when) the user has teeth.

When the phone determines that a pacifier should be replaced, the phone may output a warning, such as with the ID of the pacifier and/or an image thereof. Alternatively, the parent may scan all pacifiers, where the phone will then inform the parent when a pacifier is scanned which should be replaced.

When a pacifier is replaced or discarded, this information may be entered into the system. The processing unit will then not monitor that pacifier any more and will not output warnings, such as if no longer suited for the user.

Naturally, other types of information and warnings may be entered and used. The points in time of cleaning, such as boiling/scalding the pacifier may be entered. If a pacifier has not been cleaned for a certain period of time, a warning may be output .

## Claims

1. A method of ensuring the integrity of a pacifier the method comprising the steps of:
- reading, from the pacifier, a unique identifier,
- entering, into a processing unit, the identifier and a first point in time of use of the pacifier,
- generating first information from the first point in time and a present point in time, and
- outputting the first information.

2. A method according to claim 1, wherein the generating step comprises generating the information also from a recommended maximum period of use of the pacifier, and wherein the information is a warning, if the first point in time of use plus the recommended maximum period of use lies before the present point in time.

3. A method according to claim 1 or 2, further comprising a database comprising an entry for each unique identifier.

4. A method according to claim 3, wherein the database comprises information relating to pacifiers or types of pacifiers suited for users having teeth, the method further comprising the steps of:
- entering into the processing unit, information relating whether a user of the pacifier has teeth and
- if the pacifier is not among the pacifiers or types of pacifiers suitable for use by users having teeth, outputting corresponding information.

5. A method according to claim 2 and 4, wherein the generating step comprises reducing the recommended maximum period of use.

6. A method according to claim 3, wherein the database comprises information relating to a recommended age interval of a user of the pacifier,
the method further comprising the steps of:
- entering into the processing unit an age of a user of the pacifier,
- if the age of the user is outside of the recommended age interval, outputting corresponding information.

7. A method according to claim 2, further comprising the step of entering, into the processing unit, information relating to a percentage of time in which the pacifier is used, wherein the generating step comprises, if the percentage is above a threshold percentage, reducing the recommended maximum period of use of the pacifier.

8. A method according to any of the preceding claims, wherein the reading step comprises reading information from a RFID unit provided in the pacifier.

9. An assembly of a pacifier with a unique identifier and a processing unit comprising an entering unit, the processing unit being configured to:
- receive a first point in time of use of the pacifier,
- generate first information from the first point in time and a present point in time, and
- output the first information.

10. An assembly according to claim 9, wherein the processing unit is configured to, during the generating step, generate the information also from a recommended maximum period of use of the pacifier, and wherein the processing unit is configured to output the information in the form of a warning, if the first point in time of use plus the recommended maximum period of use lies before the present point in time.

11. An assembly according to claim 9 or 10, further comprising a database comprising an entry for each unique identifier.

12. An assembly according to claim 11, wherein the database comprises information relating to pacifiers or types of pacifiers suited for users having teeth, the processing unit further being configured to:
- receive information relating whether a user of the pacifier has teeth and
- if the pacifier is not among the pacifiers or types of pacifiers suitable for use by users having teeth, output corresponding information.

13. An assembly according to claim 10 and 12, wherein the processing unit is configured to reduce the recommended maximum period of use.

14. An assembly according to claim 11, wherein the database comprises information relating to a recommended age interval of a user of the pacifier,
the processing unit further being configured to:
- receive an age of a user of the pacifier,
- if the age of the user is outside of the recommended age interval, output corresponding information.

15. An assembly according to claim 10, wherein the processing unit is configured to:
- receive information relating to a percentage of time in which the pacifier is used, and
- if the percentage is above a threshold percentage, reduce the recommended maximum period of use of the pacifier.
